# EUROPÄISCHE PATENTSCHRIFT

(11) **EP 2 502 484 B1**
(45) Veröffentlichungstag und Bekanntmachung des Hinweises auf die Patenterteilung: **22.06.2016**
(21) Anmeldenummer: 12151856.7
(22) Anmeldetag: 20.01.2012
(51) Int. Cl.: A01D 57/20, B65G 15/46

(54) **Abdichtsystem für ein Mähwerksförderband**
Sealing system for a mower conveyor belt
Système d'étanchéification pour une bande de transport d'un mécanisme de tonte

(30) Priorität: 23.03.2011 DE 102011014770
(43) Veröffentlichungstag der Anmeldung: 26.09.2012
(73) Patentinhaber: CLAAS Saulgau GmbH, 88348 Bad Saulgau (DE)
(72) Erfinder: Ober, Martin, 78736 Epfendorf-Trichtingen (DE)

(56) Entgegenhaltungen:
- EP-A1- 0 406 766
- EP-A1- 0 853 872
- GB-A- 1 243 008

## Beschreibung

Die Erfindung betrifft ein Förderband zum Aufnehmen und Versetzen von Grünfutter, insbesondere für Mähwerke der Landwirtschaft nach dem Oberbegriff des Anspruches 1.

### Stand der Technik

Bekannt sind Querförderbänder für Mähwerke zum Querversetzen und Ablegen der Mahd. Die frisch gemähte Mahd neigt dazu an den Schnittflächen auszubluten und damit Flüssigkeit abzuscheiden. Dieser Effekt tritt noch deutlicher zu Tage, wenn die Mahd direkt nach dem Mähen einen Aufbereiter passiert hat. Wird die Mahd dann von einem Querförderband aufgenommen und relativ zur Spur des Trägerfahrzeugs querversetzt, so setzt sich der Vorgang der Flüssigkeitsabscheidung auf dem Querförderband fort und dieses führt in Verbindung mit den sogenannten Bröckelverlusten zu einer klebrigen Masse im Erntegutstrom. Gerade diese klebrige Masse führt an den seitlichen Rändern des Förderbands dazu, dass diese unterhalb der Seitenränder des Förderbands anbackt, welches die Laufeigenschaften des Förderbandes sehr nachteilig beeinflusst. Es kommt zu Störungen des Betriebsablaufs durch Querversatz des Förderguts auf der Antriebs- bzw. Umlenkrolle.

Aus EP-A-0 406 766 ist ein Mähwerk mit einem Aufbereiter und einem Förderband mit quer zur Förderrichtung angeordneten Förderleisten bekannt.

### Aufgabenstellung

Hier setzt die Aufgabe der Erfindung an mit dem Ziel, diese Störungen des Querversatzes des Fördergurts zu vermeiden.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Ein Förderband nach der Erfindung zum Aufnehmen und Versetzen von Grünfutter, insbesondere für Mähwerke der Landwirtschaft, weist einen umlaufend angetriebenen Endlosfördergurt auf, welcher mit Förderleisten besetzt ist, wobei sich diese etwa quer zur Förderrichtung erstrecken. Dieser Endlosfördergurt - nachfolgend als Fördergurt bezeichnet - wird von einer Antriebsrolle und einer Umlenkrolle aufgenommen und geführt. Antriebsrolle und die Umlenkrolle werden von einem Rahmengestell aufgenommen. Der Fördergurt wird wenigstens an einem seiner Ränder zumindest bereichsweise von Abdeckelementen übergriffen, wobei die Förderleisten wenigstens eine in einem Randbereich befindliche Ausnehmungen aufweisen, in die das Abdeckelement eingreifen kann. Dieses erhöht die Dichtwirkung des Spalts zwischen Förderband und Abdichtelement und trägt damit dazu bei, die Verschmutzung der Antriebs- und Umlenkrolle weitestgehend zu verhindern.

Die Ausnehmung kann in eine durchgehende Förderleiste eingearbeitet sein aber alternativ auch durch eine völlige Unterbrechung der Förderleiste erzeugt werden. Letzteres bedeutet, dass die Ausnehmung durch eine wenigstens zweiteilige Ausgestaltung einer Förderleiste erzeugt ist.

Vorteilhafterweise besteht das Abdeckelement aus einem flexiblen Material, so dass sich dieses an den Fördergurt mittels seiner Rückstellkraft anpressen kann.

Ebenfalls vorteilhafterweise nach der Erfindung erstreckt sich die Förderleiste zumindest über eine der Seitenränder des Förderbandes hinaus, so dass die Förderleiste über diesen Rand hervorsteht und die Förderleisten somit wenigstens auf einer Seite des Förderbandes eine Führungsbegrenzung längs eines seitlichen feststehenden Führungselements darstellen. Das bedeutet, dass die stirnseitigen Enden der Förderleisten Gleitflächen bilden, welche sich an dem feststehenden Führungselement entlang bewegen können. Die Förderleisten bestehen vorteilhafterweise aus einem verschleißfesten poliamiden Kunststoff, der zugleich geringe Reibungskräfte an den feststehenden Führungselementen hervorruft.

Die Förderleisten können mit dem Fördergurt eine Verbindung derart eingehen, dass sie mit diesem vernietet verklebt sind oder auch auf- oder einvulkanisiert sind.

Weitere Einzelheiten können dem nachfolgend dargelegten Ausführungsbeispiel entnommen werden.
- Fig. 1: zeigt einen Ausschnitt von einem gezogenen Mähwerk mit einem Querförderband in der Arbeitsstellung
- Fig. 2: zeigt den Schnitt B-B durch die Antriebsrolle eines Förderbands gemäß Fig. 3
- Fig. 3: zeigt den Schnitt A-A durch das Förderband gemäß Fig. 2
- Fig. 4: zeigt den freigelegten Fördergurt mit den Förderleisten, der Antriebsrolle und der Umlenkrolle in einem Längsschnitt
- Fig. 5: zeigt einen vergrößerten Ausschnitt aus Fig. 4
- Fig. 6: zeigt einen Schnitt C-C durch das Förderband gemäß Fig. 3
- Fig. 6a: zeigt die Einzelheit X des Förderbands gemäß Fig. 6 und zwar den linken Rand des Förderbands in einer vergrößerten Darstellung
- Fig. 6b: zeigt die Einzelheit Y des Förderbands gemäß Fig. 6 und zwar den rechten Rand des Förderbands in einer vergrößerten Darstellung
- Fig. 7: zeigt einen Querschnitt des Fördergurts
- Fig. 7a: zeigt die Einzelheit V des Fördergurts aus Fig. 7 und zwar den linken Rand des Fördergurts in einer vergrößerten Darstellung
- Fig. 7b: zeigt die Einzelheit Z des Fördergurts aus Fig. 7 und zwar den rechten Rand des Fördergurts in einer vergrößerten Darstellung

### Ausführungsbeispiel

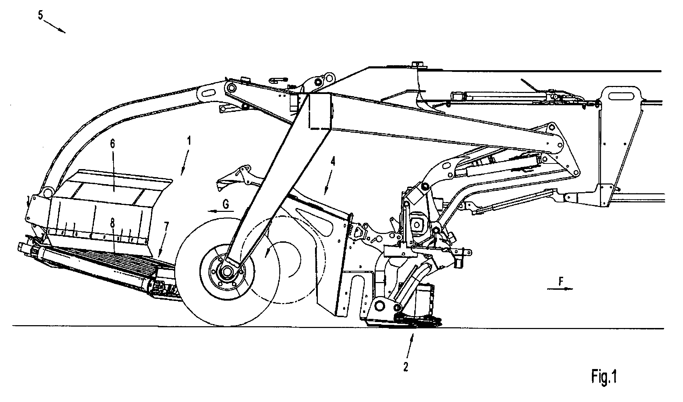

In Fig. 1 ist ein Ausschnitt von einem gezogenen Mähwerk 5 mit einem Querförderband 1 in der Arbeitsstellung dargestellt. Das Querförderband 1, nachfolgend als Förderband 1 bezeichnet, ist entgegen der Fahrtrichtung F gesehen hinter dem Mähbalken 2 des Mähwerks 5 angeordnet. Die Mahd wird in an sich bekannter Weise von einem Aufbereiter 4 aufgenommen und anschließend entgegen der Fahrtrichtung F dem Gutfluss G folgend seitlich auf das Förderband 1 gefördert und von einer Prallwand 6 aufgefangen, so dass es zur Ablage auf dem Fördergurt 7 kommt. Der Fördergurt 7 ist mit Föderleisten 8 zur besseren Mitnahme der Mahd besetzt. Die Mahd wird somit gegenüber der Fahrspur querversetzt und seitlich des Mähwerks 5 abgelegt.

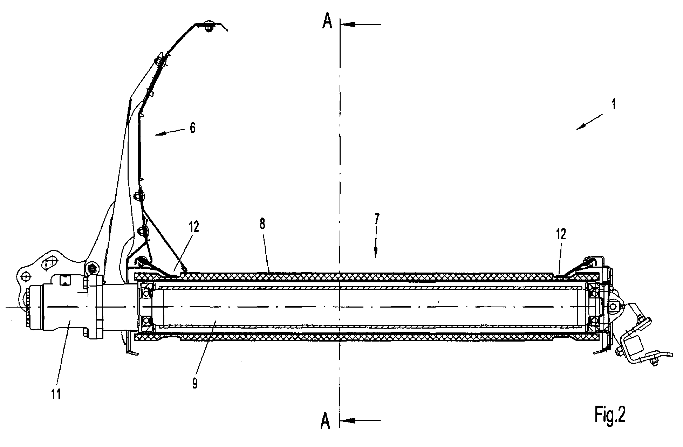

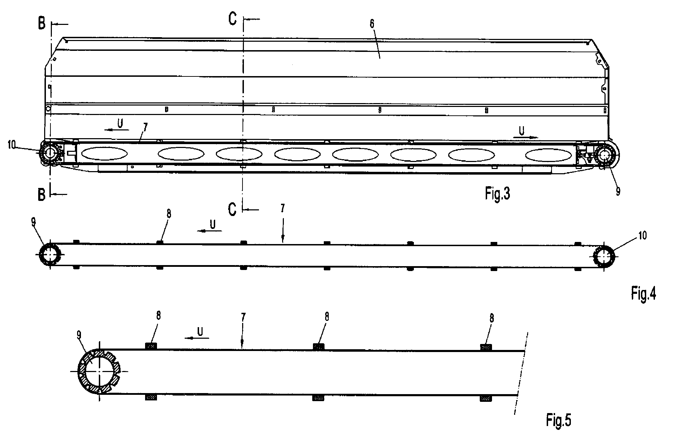

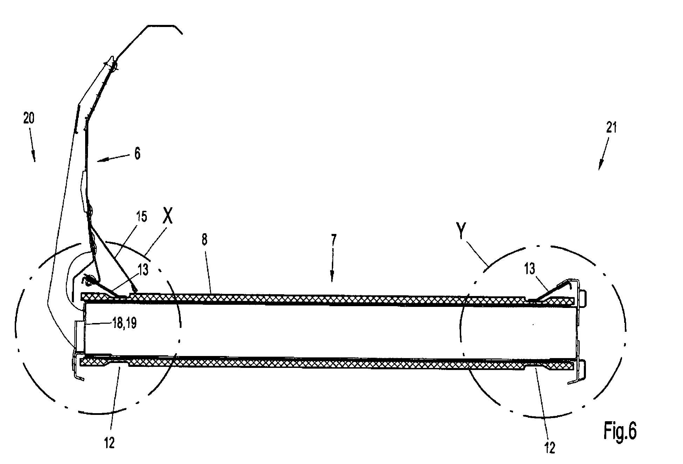

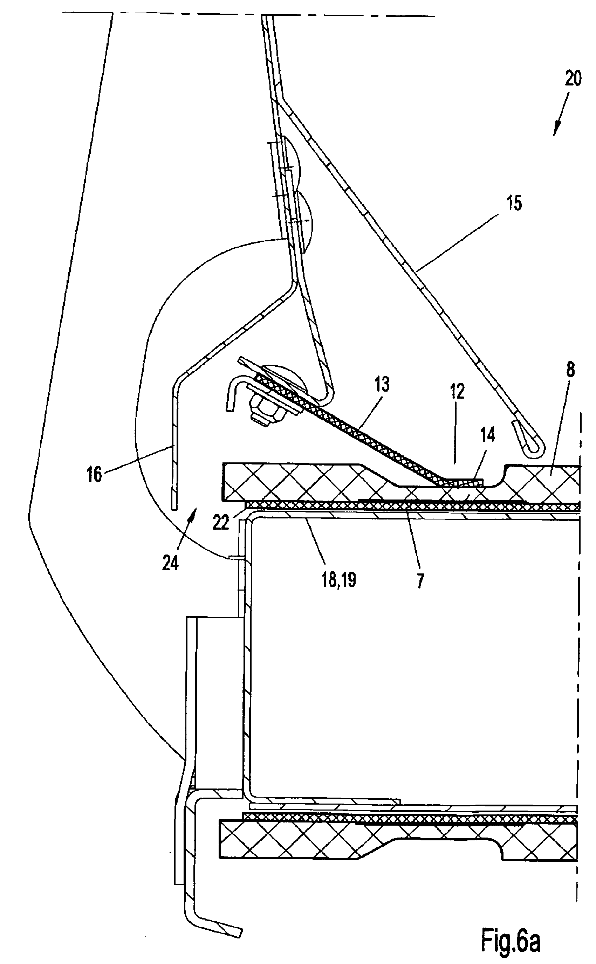

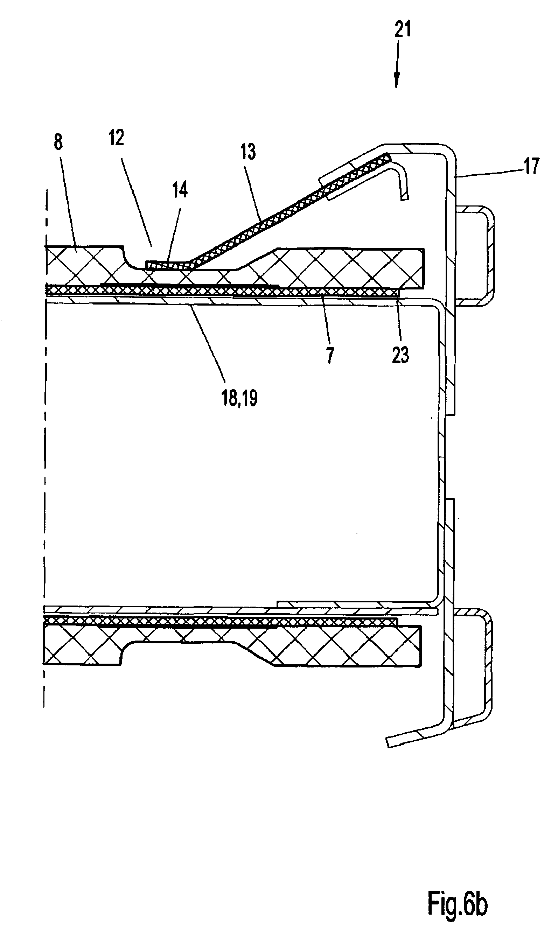

In Fig. 2 ist ein Schnitt B-B durch die Antriebsrolle des Förderbands 1 gemäß Fig. 3 dargestellt und Fig. 3 zeigt den Schnitt A-A durch das Förderband gemäß Fig. 2. Fig. 6 zeigt den Schnitt C-C durch das Förderband gemäß Fig. 3,

Fig. 4 zeigt den freigelegten Fördergurt 7 mit den Förderleisten 8, der Antriebsrolle 9 und der Umlenkrolle 10, wobei Fig.5 einen vergrößerten Ausschnitt aus Fig.4 darstellt.

Das Förderband 1 umfasst den mit Förderleisten 8 besetzten endlosen Fördergurt 7, der sich um die Antriebsrolle 9 und die Umlenkrolle 10 schlingt und der im Förderbetrieb die Umlaufrichtung U annimmt. Die Antriebsrolle 9 wird in dem Ausführungsbeispiel von einem Hydraulikmotor 11 angetrieben. Die Förderleisten 8 sind zueinander beabstandet und sie wiederholen sich längs des Umfangs des Fördergurts 7 periodisch.

Fig. 6 zeigt einen Schnitt C-C durch das Förderband 1 gemäß Fig. 3 zwischen der Antriebsrolle 9 und der Umlenkrolle 10. Dieser Schnitt C-C zeigt, dass der Fördergurt 7 in diesem Bereich von einer kastenquerschittförmigen Blechkonstruktion 19, die zugleich das Rahmengestell 18 des Förderbands 1 darstellt, aufgenommen ist.

Fig. 6a zeigt die Einzelheit X des Förderbands 1 gemäß Fig. 6 in einer vergrößerten Darstellung und zwar den linken Randbereich 20 des Förderbands und Fig. 6b zeigt die Einzelheit Y des Förderbands 1 in einer vergrößerten Darstellung gemäß Fig. 6 und zwar den rechten Randbereich 21 des Förderbands in einer vergrößerten Darstellung.

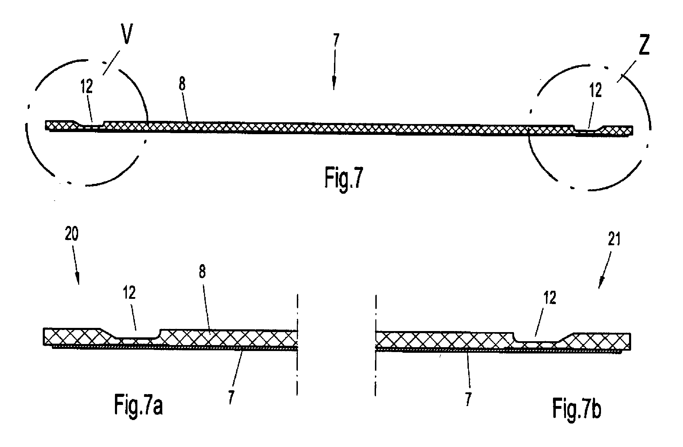

Weitere Einzelheiten der Ausgestaltung des Fördergurts 7 und der Förderleiste 8 zeigen Fig. 7. Fig. 7a zeigt den linken Rand des Fördergurts 7 als vergrößerte Einzelheit V und Fig.7b zeigt den rechten Rand des Fördergurts 7 als vergrößerten Ausschnitt Z.

In dem dargestellten Ausführungsbeispiel sind die Förderleisten 8 an beiden Enden mit Ausnehmungen 12 ausgebildet, in die ein flexibles Abdeckelement 13 eingreift und welches an seiner Kontaktfläche zum Fördergurt 7 bzw. zum Grund der Ausnehmung 12 mit diesem eine Dichtlippe 14 bildet. Auf der Seite der Prallwand 6 wird die Ausnehmung 12 mit dem Abdeckelement 13 und der Dichtlippe 14 zusätzlich zum Schutz vor Beschädigungen durch das anprallende Material des Gutstroms von einem Abdeckblech 15 übergriffen.

Des Weiteren ist den Figuren Fig. 6a und Fig. 6b zu entnehmen, dass die Förderleisten 8 beidseitig über die Seitenränder 22,23 des Fördergurts 7 hervorstehen. Dieses beinhaltet den Vorteil, dass die Förderleisten 8 als Führungsbegrenzung längs der seitlichen feststehenden Führungselemente 16,17 fungieren können, wenn der Fördergurt 7 während seines Umlaufs einer Querverrückung ausgesetzt ist. Die Führungselemente 16,17 stellen abgekantete Blechprofile dar, die sich über die gesamte Länge des Förderbands 1 erstrecken und die fest mit dem Rahmengestell 18 des Förderbands 1 verbunden sind.

Eine weitere erfinderische Ausgestaltung zur Schmutzabweisung zeigt die Fig. 6a, indem das Fördeband 1 auf der Seite der Prallwand 6 eine Durchlassöffnung 24 zum Schmutzaustritt für trotz der Dichtlippe durchtretende Schmutzanteile aufweist.

### Bezugszeichenliste

- 1: Querförderband, Förderband
- 2: Mähbalken
- 3: Mähwerk
- 4: Aufbereiter
- 5: Mähwerk
- 6: Prallwand
- 7: Fördergurt
- 8: Förderleiste
- 9: Antriebsrolle
- 10: Umlenkrolle
- 11: Hydraulikmotor
- 12: Ausnehmungen
- 13: Abdeckelement
- 14: Dichtlippe
- 15: Abdeckblech
- 16: Führungselement
- 17: Führungselement
- 18: Rahmengestell
- 19: kastenquerschnittförmige Blechkonstruktion
- 20: linker Randbereich des Förderbands
- 21: rechter Randbereich des Förderbands
- 22: Seitenrand des Fördergurts
- 23: Seitenrand des Fördergurts
- 24: Durchlassöffnung
- F: Fahrtrichtung
- G: Gutflussrichtung
- U: Umlaufrichtung
- V: Einzelheit
- X: Einzelheit
- Y: Einzelheit
- Z: Einzelheit
- A-A: Schnittverlauf
- B-B: Schnittverlauf
- C-C: Schnittverlauf

## Patentansprüche

1. Förderband (1) zum Aufnehmen und Versetzen von Grünfutter, insbesondere für Mähwerke (3) der Landwirtschaft, mit einem mit Förderleisten (8) besetzten und umlaufend angetriebenen Fördergurt (7), dessen Förderleisten (8) sich etwa quer zur Umlaufrichtung (U) erstrecken, wobei der Fördergurt (7) von einer Antriebsrolle (9) und einer Umlenkrolle (10) aufgenommen und geführt ist und die Antriebsrolle (9) und die Umlenkrolle (10) von einem Rahmengestell (18) aufgenommen sind und der Fördergurt (7) an wenigstens einem seiner Ränder zumindest bereichsweise von Abdeckelementen (13) übergriffen wird, **dadurch gekennzeichnet, dass** die Förderleisten (8) wenigstens eine in einem Randbereich (20,21) des Förderbands (1) befindliche Ausnehmung (12) aufweisen, in die ein Abdeckelement (13) eingreift.

2. Förderband nach Anspruch 1, **dadurch gekennzeichnet, dass** die Förderleisten (8) in beiden Randbereichen (20,21) des Förderbands (1) eine Ausnehmung (12) aufweisen, in die jeweils ein Abdeckelement (13) eingreifen kann.

3. Förderband nach Anspruch 1, **dadurch gekennzeichnet, dass** die wenigstens eine Ausnehmung (13) in eine durchgehende Förderleisten (8) eingearbeitet ist.

4. Förderband nach Anspruch 1, **dadurch gekennzeichnet, dass** die Ausnehmung (12) durch eine wenigstens zweiteilige Ausgestaltung einer Förderleiste erzeugt ist.

5. Förderband nach Anspruch 1, **dadurch gekennzeichnet, dass** das Abdeckelement (13) aus einem flexiblen Material besteht.

6. Förderband nach Anspruch 1, **dadurch gekennzeichnet, dass** die Förderleiste (8) zumindest über einen der Seitenränder (22,23) des Fördergurtes (7) hervorsteht.

7. Förderband nach Anspruch 1, **dadurch gekennzeichnet, dass** die Förderleisten (8) wenigstens auf einer Seite des Förderbandes (1) einen Führungsanschlag für den Fördergurt beinhalten.

8. Förderband nach Anspruch 1, **dadurch gekennzeichnet, dass** das Förderband (1) wenigstens in einem Randbereich (20,21) ein Führungselement (16,17) als Anschlagbegrenzung der Förderleisten (8) gegen seitliche Querverrückung des Förderbands (1) aufweist.

9. Förderband nach Anspruch 1, **dadurch gekennzeichnet, dass** die Förderleisten mit dem Fördergurt vernietet, verklebt oder aufvulkanisiert sind.

10. Förderband nach Anspruch 1, **dadurch gekennzeichnet, dass** die Förderleisten (8) aus einem verschleißfesten poliamiden Kunststoff bestehen.

11. Förderband nach Anspruch 1, **dadurch gekennzeichnet, dass** das Förderband (1) auf der Seite der Prallwand (6) eine Durchlassöffnung (24) zum Schmutzaustritt aufweist.

## Claims

1. A conveyor belt (1) for receiving and displacing green fodder, in particular for mowing mechanisms (3) in agriculture, comprising a conveyor belt member (7) which is driven in a circulating movement and is fitted with conveyor bars (8) extending approximately transversely relative to the circulation direction (U), wherein the conveyor belt member (7) is supported and guided by a drive roller (9) and a direction-changing roller (10) and the drive roller (9) and the direction-changing roller (10) are carried by a frame structure (18) and the conveyor belt member (7) at at least one of its edges has at least region-wise cover elements (13) extending thereover, **characterised in that** the conveyor bars (8) have at least one recess (12) which is disposed in an edge region (20, 21) of the conveyor belt (1) and into which a cover element (13) engages.

2. A conveyor belt according to claim 1 **characterised in that** the conveyor bars (8) in both edge regions (20, 21) of the conveyor belt (1) have a recess (12) into which a respective cover element (13) can engage.

3. A conveyor belt according to claim 1 **characterised in that** the at least one recess (13) is incorporated into a continuous conveyor bar (8).

4. A conveyor belt according to claim 1 **characterised in that** the recess (12) is produced by an at least two-part configuration of a conveyor bar.

5. A conveyor belt according to claim 1 **characterised in that** the cover element (13) comprises a flexible material.

6. A conveyor belt according to claim 1 **characterised in that** the conveyor bar (8) projects at least beyond one of the side edges (22, 23) of the conveyor belt member (7).

7. A conveyor belt according to claim 1 **characterised in that** the conveyor bars (8) at least on one side of the conveyor belt (1) includes a guide abutment for the conveyor belt member.

8. A conveyor belt according to claim 1 **characterised in that** at least in one edge region (20, 21) the conveyor belt (1) has a guide element (16, 17) as an abutment limitation for the conveyor bars (8) to prevent lateral transverse displacement of the conveyor belt (1).

9. A conveyor belt according to claim 1 **characterised in that** the conveyor bars are riveted to, glued to or vulcanised onto the conveyor belt member.

10. A conveyor belt according to claim 1 **characterised in that** the conveyor bars (8) comprise a wear-resistant polyamide plastic.

11. A conveyor belt according to claim 1 **characterised in that** on the side of the baffle wall (6) the conveyor belt (1) has an outlet opening (24) for dirt to issue.

## Revendications

1. Convoyeur à bande (1) pour ramasser et déplacer du fourrage vert, en particulier pour des têtes de fauchage (3) agricoles, comprenant une courroie de convoyeur (7) qui est garnie de barrettes de convoyeur (8) et est entraînée en rotation et dont les barrettes de convoyeur (8) s'étendent sensiblement transversalement au sens de rotation (U), la courroie de convoyeur (7) étant reçue et guidée par un rouleau d'entraînement (9) et par un rouleau de renvoi (10), et le rouleau d'entraînement (9) et le rouleau de renvoi (10) étant reçus par un châssis (18), et la courroie de convoyeur (7) étant recouverte, au moins par endroits, au niveau d'au moins un de ses bords, par des éléments de recouvrement (13), **caractérisé en ce que** les barrettes de convoyeur (8) comportent au moins un évidement (12) qui se trouve dans une zone de bord (20, 21) du convoyeur à bande (1) et dans lequel pénètre un élément de recouvrement (13).

2. Convoyeur à bande selon la revendication 1, **caractérisé en ce que** les barrettes de convoyeur (8) comportent, dans les deux zones de bord (20, 21) du convoyeur à bande (1), un évidement (12) dans lequel peut pénétrer un élément de recouvrement (13).

3. Convoyeur à bande selon la revendication 1, **caractérisé en ce que** le au moins un évidement (13) est ménagé dans une barrette de convoyeur d'un seul tenant (8).

4. Convoyeur à bande selon la revendication 1, **caractérisé en ce que** l'évidement (12) est réalisé par une conception en au moins deux parties d'une barrette de convoyeur.

5. Convoyeur à bande selon la revendication 1, **caractérisé en ce que** l'élément de recouvrement (13) est constitué de matériau flexible.

6. Convoyeur à bande selon la revendication 1, **caractérisé en ce que** la barrette de convoyeur (8) dépasse au moins d'un des bords latéraux (22, 23) de la courroie de convoyeur (7).

7. Convoyeur à bande selon la revendication 1, **caractérisé en ce que** les barrettes de convoyeur (8) comportent, au moins sur un côté du convoyeur à bande (1), une butée de guidage pour la courroie de convoyeur.

8. Convoyeur à bande selon la revendication 1, **caractérisé en ce que** le convoyeur à bande (1) comporte, au moins dans une zone de bord (20, 21), un élément de guidage (16, 17) servant de butée de limitation des barrettes de convoyeur (8) contre un déplacement transversal latéral du convoyeur à bande (1).

9. Convoyeur à bande selon la revendication 1, **caractérisé en ce que** les barrettes de convoyeur sont reliées à la courroie de convoyeur par rivetage, collage ou vulcanisation.

10. Convoyeur à bande selon la revendication 1, **caractérisé en ce que** les barrettes de convoyeur (8) sont constituées d'une matière synthétique polyamide résistante à l'usure.

11. Convoyeur à bande selon la revendication 1, **caractérisé en ce que** le convoyeur à bande (1) comporte, sur le côté de la paroi déflectrice (6), une ouverture de passage (24) pour évacuer la terre.
